# EUROPEAN PATENT SPECIFICATION

(11) **EP 1 143 641 B1**
(45) Date of publication and mention of the grant of the patent: **09.01.2008**
(21) Application number: 99969554.7
(22) Date of filing: 20.09.1999
(51) Int. Cl.: H04B 7/26, H04B 7/15, H04B 7/005, H04B 1/38, H04Q 7/32

(54) **METHOD AND DEVICE FOR TRANSMITTING A MESSAGE IN A MOBILE COMMUNICATION SYSTEM**
VERFAHREN UND GERÄT ZUR ÜBERTRAGUNG EINER NACHRICHT IN EINEM MOBILEN KOMMUNIKATIONSSYSTEM
PROCEDE ET DISPOSITIF DE TRANSMISSION DE MESSAGE DANS UN SYSTEME DE COMMUNICATION MOBILE

(30) Priority: 21.09.1998 RU 98117651
(43) Date of publication of application: 10.10.2001
(73) Proprietor: Obschestvo S Ogranichennoi Otvetstvennostiju "SIVERA", Moscow 107082 (RU)
(72) Inventor: Obschestvo S Ogranichennoi Otvetstvennostiju "SIVERA", Moscow 107082 (RU)
(74) Representative: Patentanwälte Zellentin & Partner
(86) International application number: PCT/RU1999/000341
(87) International publication number: WO 2000/018040

(56) References cited:
- EP-A- 0 519 487
- EP-A- 0 651 524
- EP-A- 0 720 304
- EP-A2- 0 519 487
- EP-A2- 0 523 687
- DE-A- 19 600 119
- RU-A1- 94 015 805
- SU-A1- 1 522 417
- SU-A1- 1 555 881
- US-A- 4 539 706
- US-A- 5 524 044
- US-A- 5 570 354

## Description

### Field of the Invention

The invention relates to wireless communication, in particular, to personal radio communication devices, and can be suitably used in a mobile telephone communication system.

### Background Art

The closest prior art (prototype) of the claimed invention, in respect of the set of essential features, is a method for message transmitting as embodied in a radiotelephone intended for operation in a mobile communication system, and comprising a transceiver coupled to a control unit and including an emitter implemented in the form of a transceiver antenna (US Patent N 5 530 736, cl. 5 H 04 Q 7/20, 1994).

A disadvantage of the mentioned and similar radiotelephones is that the electromagnetic radiation affects a user's (subscriber's) health, and in particular said radiation acts on his/her head causing, in particular, cancer diseases. The reason is that practically all mobile systems use a decimetre range frequency (900-1800 MHz), which frequency, having radiation power of about one Watt and practically a zero distance r (r = 0.05 m) between a radio telephone and user's head, is capable of creating in the temporal bone area a power density 10-100 times exceeding the permitted values. Further, reducing of the radiation power does not result in a complete solution of this problem, because the recent numerous studies associate, above all, the causes of various head diseases to value of radiation frequency, not its density. Besides, a lower radiation power emitted by a radiotelephone results in that a system becomes more expensive, and communication quality deteriorates; and in some cases, with certain ratios of frequency and power, in such devices as ordinary mobile radio stations - very low power levels still remain being hazardous. This circumstance has been indicated in one of published theses ("Izobretatel' i Ratsinalizator" journal [Inventor and Improver], N 2, 1999, p. 25), wherein it is demonstrated that radio frequency of 152 MHz of a low intensity (less than 1 mW/cm) affects such biological processes as myocardium activity, erythrocytes status, immunity, endocrine system. Known are methods of protection against electromagnetic radiation, according to which methods various shielding elements are used to reduce power of radiation directed to the head area. Thus, US Patent N 5 657 386 (cl. 6 H 04 M 1/00, 1995) describes a cellular telephone, wherein its radio transmitter is attached to user's head and a shield made of a plastic having carbon fiber filler is positioned between a head and said transmitter. This arrangement seems to bring about additional inconveniences for a user of such cellular telephone. Further, a disadvantage of all known methods of protection involving the use of shielding elements is their unsatisfactory efficiency. It can be also noted that many leading manufacturers produce mobile communication means equipped with shielding elements. As an example, cellular telephone SL10 (manufactured by Siemens) can be mentioned, in which telephone a shiftable cover a device has an embedded shield that reflects the antenna electromagnetic radiation.

Another disadvantage of the known mobile communication systems operated on the basis of fixed base stations (fixed repeaters) is inconsistency between radiation powers of a base station and, for example, a mobile telephone. Their transmitters have practically equal sensitivity, and a lower, as compared with a base station, radiation power of a mobile telephone often becomes the cause of the unilateral communication, when only reception of a signal from a base station is possible. Among the main causes of this difficulty, a low radiation power of a cellular telephone and its unamenable location, e.g. in closed premises, can be mentioned. To remedy said disadvantage, EP 6966150 A2 (cl. 6 H 04 Q 7/32, 1995) proposes a system for signalling an inaccessible radiotelephone call. In said system, a base station transmits an identification code, upon reception of which code a response unique signal is transmitted by a mobile telephone. When a level of the mobile telephone response signal is not sufficient, a user is given a signal indicating that the mobile telephone does not receive the call at its location, and for establishing the bilateral communication the mobile telephone location must be changed. A disadvantage of this system is the necessity to find an optimal location, which is not always possible, as well as a low reliability of information transmission due to a low level of the mobile telephone radiation power.

European Patent Application EP 0 519 487 A2 discloses a method for transmitting a message in a communication system, comprising a communication means which transmits a message to a mobile repeater (satellite). The repeater receives a first and a second signal from the communication means and returns a first and a second signal back to the communication means, wherein a phase difference between the return signals is measured. Then, the transmission power of the communication means is controlled so that the phase difference becomes equal to a predetermined value. I.e. transmission power is selected depending on the phase difference between the first and the second return signals.

### Disclosure of the Invention

The invention objective is to lower frequency or density of electromagnetic radiation in the vicinity of user's head, with simultaneous improvement of communication reliability.

The essence of this objective according to the invention consists in that, for transmitting a message in a mobile communication system: a mobile communication means, e.g. a radio telephone, generates an electromagnetic radiation coded by said message, e.g. by modulation, which electromagnetic radiation will have predetermined power and frequency values; the mobile communication means generating a message-coded auxiliary radiation, which is used for each of mobile communication means; and at least one mobile repeater that receives and processes said auxiliary radiation, and also generates and transmits said message-coded electromagnetic radiation; a power value of the electromagnetic radiation generated by the mobile communication means being set within the range of zero to a predetermined value.

The invention technical result is an increased distance between the user's head and a source of an highfrequency electromagnetic radiation to be attained through the use of a portable mobile repeater.

Said technical result can be achieved, in particular, by a mobile communication means comprising at least an auxiliary radiation transceiver coupled to a control unit; parameters of a second auxiliary radiation transceiver being consistent with those of the mobile repeater.

An advantage of the proposed method is elimination of the action exerted on individual's health by a mobile communication means, and an improved communication quality. Other features and advantages of the invention will be obvious from the following detailed specification and claims 2-30.

### Brief Description of Drawings

The invention is further explained by description of particular, but not limiting, embodiments of the invention and accompanying drawings, wherein
Fig. 1 illustrates a first embodiment of a mobile communication means block diagram;
Fig. 2 illustrates a second embodiment of a mobile communication means block diagram;
Fig. 3 illustrates a third embodiment of a mobile communication means block diagram;
Fig. 4 illustrates a functional diagram of a mobile radio telephone and mobile repeater;
Fig. 5 illustrates an algorithm of a mobile communication system operation.

### Best Methods of Carrying out the Invention

For description of the explained embodiments of the communication means illustrated in the drawings, specific narrow terms are used. However, the invention is not limited by the terms used herein, and it should be appreciated that each of such terms includes all equivalent members operated in a similar way and applied to serve the same purposes. For example, the "mobile repeater" term used in the specification, can be not only mobile, but also a fixed one positioned at the locations where a mobile communication means can be used. Referring to a particular embodiment of the invention explained by the accompanying drawings. Further description of the invention is exemplified by a telephone communication mobile system.

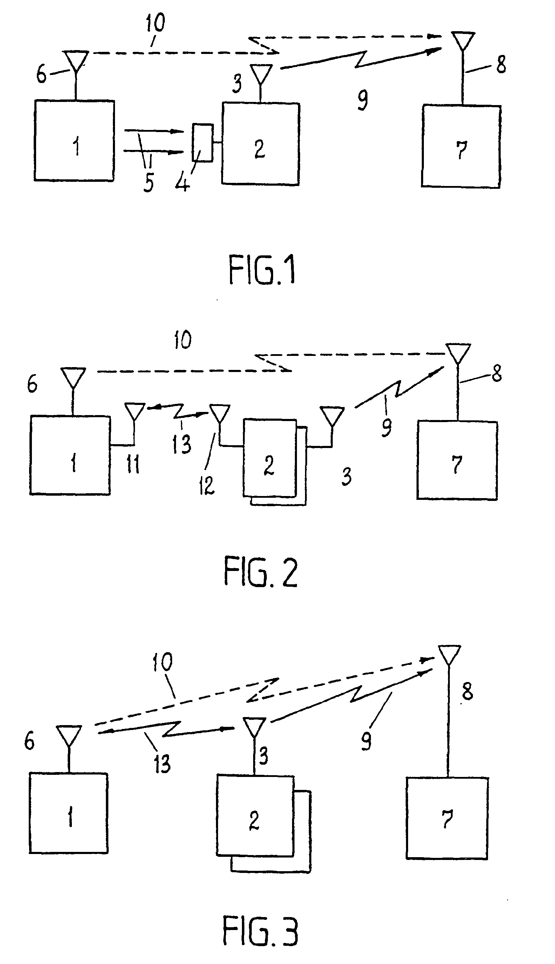

Fig. 1 represents a first version of a mobile communication system block diagram; wherein 1 is a mobile communication means; 2 - a mobile repeater having one transceiver antenna 3 and a receiver 4 for receiving flux P of an auxiliary radiation 5 emitted by the.mobile communication means 1. The latter has a transceiver antenna 6 that produces electromagnetic radiation, whose carrier frequency presently is F1. Message transmissions in the mobile communication system are carried out by generating with the mobile communication means 1, e.g. a radio telephone, the electromagnetic radiation coded by this message, e.g. by modulation, and having predetermined values of power and carrier frequency (F1, in this case); the mobile communication means 1 generating message-coded the auxiliary radiation 5, and at least one mobile repeater 2 is used, which repeater receives and processes the auxiliary radiation 5 and also generates and transmits said message-coded electromagnetic radiation.

It can be noted that by carrier frequency F1 meant is the frequency used for a given standard at this moment. For some standards, carrier the frequency F1 can vary depending on location of the mobile communication means and a frequency channel within the operation frequency range wherein a message is transmitted. In other cases (CDMA standard), the frequency F1 can be changed continuously according to an arbitrary rule, density of distribution of probabilities of which rule having been determined in advance. As flux P of auxiliary radiation 5, any radiations usually utilized for message transmission can be used: light, infrared, ultrasound and other radiations. When flux P is used as electromagnetic radiation, a repeater is a transceiving radio station that receives signals, amplifies (converts) and transmits them farther. It is assumed that the message transmission takes place according to GSM standard, wherein time-division multiple access is applied. In such case, a relayed message will have the form of a sequence of bursts placed in special time slots. Such system will also comprise a base astation 7 with an antenna 8. Needless to say that instead of the base station 7 another communication means, for example, a mobile means, can be used. The mobile repeater 2 is implemented as a portable device, located near a subscriber who has the mobile communication means 1, and intended to retransmit the flux P of the auxiliary radiation 5 on carrier the frequency F1. The process of transmission of electromagnetic radiation from the mobile repeater 2 is shown by a broken arrow 9. When the mobile repeater 2 is not present or when it fails, the message transmission from the mobile communication means 1 to the base station 7 is carried out directly by the mobile communication means 1 on carrier frequency of electromagnetic F1. Process of transmission of said radiation is shown by a dashed arrow 10.

Fig. 2 shows a block diagram of the mobile communication system, wherein electromagnetic radiation having frequency F2 (F2>F1, F2<F1, or F2=F1) is used as the auxiliary radiation 5. All explanations made herein with respect to the frequency F1 also apply to the frequency F2. For transmission of the auxiliary radiation 5, the mobile communication means 1 has an additional antenna 11. Further, the system uses a plurality of the mobile repeaters 2, each of which repeaters has an additional antenna 12 to receive the auxiliary radiation 5. For operation of the mobile repeaters 2 and the mobile communication means 1, two separate transceiver antennas or one common transceiver antenna 3,6 (Fig. 3) can be used. In the latter case a duplex filter, i.e. a device separating the reception and transmission bands, can be used.

Process of transmission of the electromagnetic auxiliary radiation from the communication means 1 to the mobile repeater 2 is shown by broken arrow 13. Process of transmission of the electromagnetic radiation to the communication means 1 from the mobile repeater 2 in the direction shown by broken arrow 13 is associated with transmission of control signals required for ascertaining a possibility of using the repeater 2.

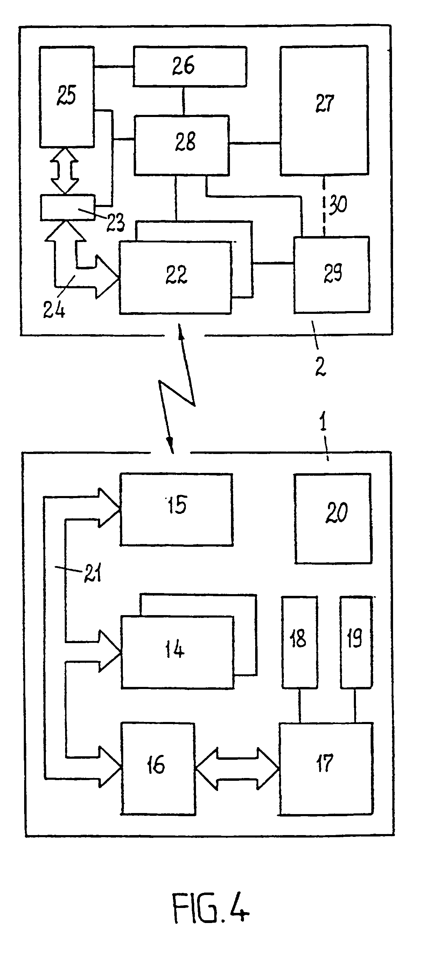

Fig. 4 shows a functional diagram of a mobile radiotelephone (mobile communication means) 1 that is used in this system and consistent with the mobile repeater 2 in respect of its parameters. The mobile radio telephone comprises n(n>1) main transceivers 14 and at least one additional transceiver 15, an interface 16, a control unit (controller) 17 connected to an electromagnetic radiation presence indicator 18 and to an auxiliary radiation code inputting unit 19; and an internal power supply source 20. As the indicator 18, one or more LED-emitters can be used. The main transceiver 14 provides transmission of the electromagnetic radiation having the frequency F1 and comprises a (controlled) radio circuit connected to a transceiver antenna. The additional transceiver 15 usually comprises the electronic circuits intended to be operated with auxiliary radiation emitters. As the latter, the following devices can be used: isotropic (non-directed) antenna, magnetic antenna, acoustic emitter, optical emitter. It should be appreciated that such emitters may be omitted as well. In such case, as mentioned above, the transceivers 14 and 15 can comprise common antenna 6. The transceivers 14, 15 are coupled via internal bus 21 through the interface 16 to the control unit 17 based on a microcomputer and including its conventional members: central processor, read-only and random-access memories, input-output means, timers, adapters, registers, analog-digital converters, etc. The latter are used, in particular, for measuring levels of the signal received by the mobile radiotelephone. It should be also appreciated that the mobile communication techniques now have the dedicated integrated circuits intended to serve practically all the mobile communication purposes. The main principles of setting up a circuitry for the mobile repeater 2 are known and standard. Said circuitry usually includes one or more transceivers 22 connected through an interface 23 via internal bus 24 to a control unit (controller) 25 that in turn is connected to means 26 for establishing a unique code. It is noted that the control unit 25 can be provided therein with an indicator of operation modes of the mobile repeater 2. If the electromagnetic radiation is used as the auxiliary radiation, then the transceiver 22 comprises one or two antennas. One of these (receiving one) antennas can be implemented as a magnetic antenna. Examples of the principle of the structures and functions used in this invention can be provided by the following type of repeaters: Vertex VXR-5000, Motorola GR300/500. As the additional features of the mobile repeater 2, the following ones should be mentioned: an internal power supply source 27 is connected to the repeater's electroniccircuitry via a means for activation of the mobile repeater 2 from the stand-by mode, which means includes controlled key 28; control input of said key being connected to a control circuit 29 that in turn is coupled to the transceiver 22. Dashed line 30 denotes connection of the power supply source 27 to the control circuit 29. This connection is required in the case when a separate power supply source is not used to energize the control unit 29.

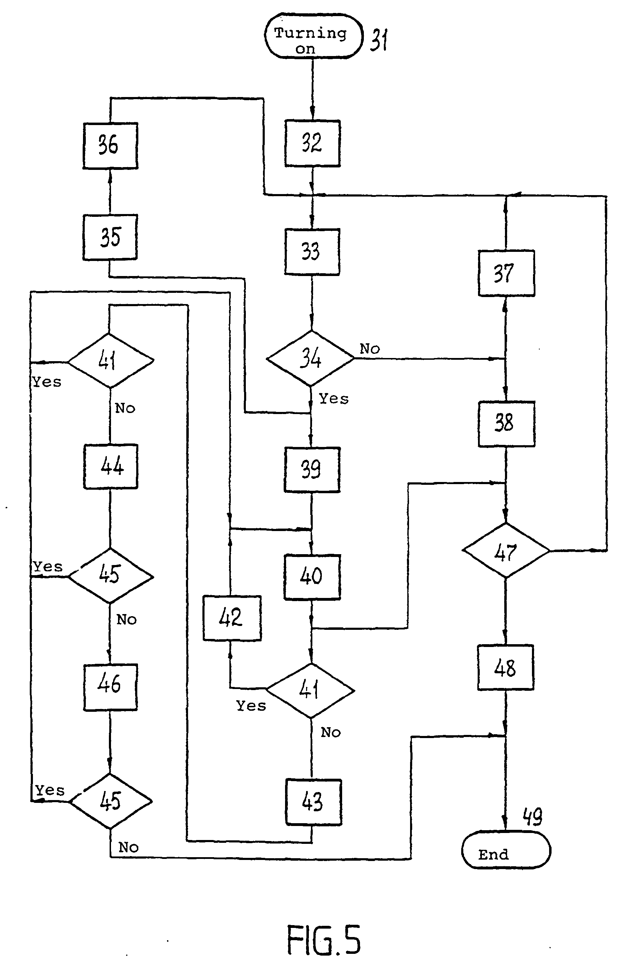

Fig. 5 illustrates a chart of a system functioning algorithm. Reference numerals not completely designated in Fig. 5 are as follows.
32 is the step of "Generation and transmission of a signal for activation and selection of an auxiliary radiation ciphering code";
33 is the step of "Assessment of communication quality based on auxiliary radiation, and indication of mobile repeater parameters";
34 is the condition of "Whether communication quality based on auxiliary radiation is satisfactory?";
35 denotes the "Power change" step;
36 denotes the step of "Indication";
37 denotes the step of "Power increase";
38 denotes the step of "Transmission of a message by a mobile communication means without use of mobile repeater, and indication of this step";
39 denotes the step of "Transmission of a message by auxiliary radiation";
40 denotes the step of "Assessment of communication quality on frequency F1";
41 denotes the condition of "Whether quality of communication on frequency F1 is satisfactory?";
42 denotes the step of "Change in system power and structure";
43 denotes the step of "Power increase";
44 denotes the step of "Connection of additional mobile repeater";
45 denotes the condition of "Whether quality of communication on frequency F1 after a change in the system structure is satisfactory?";
46 denotes the step of "Connection of radiation on frequency F1 from a mobile communication means";
47 denotes the condition of "Is mobile communication means 1 turned off?";
48 denotes the step of "Generation and transmission of the turn-off signal".

The device for transmitting a message in the mobile communication system is operated according to the logarithm chart shown in Fig. 5.

This algorithm is practically executed using an application software, which, first, is stored in a read-only memory in the control unit 17, and, second, - in memory of the controller 25 arranged in the mobile repeater 2. The algorithm is initiated (step 31) by turning-on of the mobile communication means 1. If such means is a radiotelephone, then step 31 is caused by "off-hook" instruction. After the mobile communication means 1 has been turned on, a signal for turning-on the mobile repeater 2 is generated and transmitted (step 32). Said signal can be transmitted by one of the transceivers 14, 15. After said signal has been received by the input members (antenna or receivers of the flux P of the auxiliary radiation 5) of the transceiver 22 and delivered to input of the control circuit 29, the key 28 is released, and power from the source 27 is supplied to electronic circuitry of the mobile repeater 2.

The control circuit 29 in the stand-by mode for turning the mobile repeater on is operated in the low current consumption mode from its own power supply source or from the source 27. Further, the step 32 describes how a code for ciphering the auxiliary radiation is established and selected. A ciphering (unique) code can be established manually or automatically. The manual establishing is done by setting the mutually consistent codes in the unit 19 and the means 26. Manual establishing can be done using special slide switches. Automatic establishing can be done in cases when the mobile communication means 1 seeks unoccupied channels according to the auxiliary radiation. In this case the algorithm of a unique code can be transferred to the controller 25 memory via channel 13.

It should be noted that an efficient method for coding the auxiliary radiation is the use of a pseudonoise signal and the message transmission principles applied in a CDMA system. Automatic search for unoccupied channels according to the auxiliary radiation can be based on the principles used in mobile telephone communication systems. Upon turning-on of a mobile repeater, quality of communication on the auxiliary radiation is checked (step 33), and, if necessary, indication of parameters of the mobile repeater on an indicator of the mobile communication means 1 (status of the power supply source 27, location of the repeater 2, etc.) is effected. Checking of communication quality and also transmission of said parameters can be done by generation of a special signal in the mobile repeater 2, which signal either transmits the quality data of the signal received by the repeater from the mobile communication means via a channel that uses the auxiliary radiation, or this signal itself is the signal according to which the communication quality is assessed, but in this case in the mobile communication means proper.

Assessment, as such, of the signal quality, as it is discussed hereinafter, is done by standard methods using an application software after the signal has passed through an analog-digital converter that can be provided for in the transceivers 14, 15, 22. It should be noted that measurement of a signal level is a standard function of many mobile systems, e.g. in a CMDA mobile telephone communication system.

When assessment of quality of the channel, that uses the auxiliary radiation 5, is negative ("No" in the condition 34), then its power is increased (step 37). Message transmission in case of the negative result ("No" in the condition 34) of the channel quality assessment is performed (step 38) from the mobile communication means 1 without use of the mobile repeater 2 on carrier the frequency F1. Switching to this operation mode is carried out automatically, de-activation of the auxiliary radiation being not mandatory (especially when there is no the repeater 2). It should be noted that if the cause of an unsatisfactory operation of the channel is a poor condition of the power supply source 27, then in the mobile repeater a special signal can be generated, and after reception and decoding of which signal by the mobile communication means 1 a corresponding indication on the control unit 17 indicator appears. A cause of an unsatisfactory operation of a channel can also be indicated on the controller 17 display (poor condition of the power supply source 20, 27; presence of shielding objects between the means 1 and the repeater 2; external interference that affects the auxiliary radiation 5; maximal distance between the means 1 and the repeater 2 is exceeded).

When assessment of quality of channel on the auxiliary radiation 5 is satisfactory ("Yes" in the condition 34), its functioning (step 36) is indicated by illumination of a corresponding LED associated with the indicator 18, and, if necessary, by changing (step 35) power of said radiation to render the same to its rated value (power can be changed by conventional methods discussed below). In this case, a message is transmitted (step 39) to the base station 7 via a channel that uses the flux P of the auxiliary radiation 5 and the electromagnetic radiation, coded by said message, having the frequency F1, which radiation is emitted by the antenna 3 of the mobile repeater 2 (Figs. 1, 2, 3). When electromagnetic radiation of the frequency F2 is used as the auxiliary radiation 5, message transmission will be carried out through the mobile repeater 2 that receives a signal on the frequency F2, demodulates, amplifies and transmits the same on the frequency F1 (Figs. 2, 3).

The time taken to process a signal is considered as negligible. As it is mentioned heretofore, various types of mobile repeaters can be used. When an "open repeater" is used, a signal is relayed when a carrier with a frequency corresponding to the repeater reception frequency appears in the air. In case of use of an access code repeater, relaying will occur only after an access programmed signal has been decoded. In the simplest case, repeater can be enabled by relevant control signal. In case when more sophisticated controllers are used, an access code can be transmitted in various signalling systems.

In case an electromagnetic flux energy is used as the auxiliary radiation, parameters are to be selected such so that they will not exert an injurious action on user's head. Such parameters obviously should be a very low the frequency F2 (F2<< F1) of radiation, or a very low level of radiation power. The author believes that the latter can be less than 1 mW. In such case the mobile telephone 1 can have no second transceiver 15. Then, electromagnetic radiation of the transceiver 2 having the frequency F1 (or a frequency approximating F1) with a lowered radiation power can be used as the auxiliary radiation.

The instruction to reduce the radiation power in the transceiver 14 can be given to its control input from the control unit 17. The latter in its turn generates the instruction after, for example, the mobile telephone 1 has received a special signal from the mobile repeater 2. However, it should be noted that for the purpose to prevent communication between the receiving and transmitting devices of the repeater, auxiliary frequency F2 must be slightly different from the average operation the frequency F1 of electromagnetic radiation. A change in the frequency F1 in this case can be carried out by a special instruction from the control unit 17 supplied to the main transceiver 14.

It is further noted that whereas density of electromagnetic energy drops as distance R from a source grows, in inverse proportion to the square of said distance, then location of the mobile repeater 2 even in an attache case (distance R to user's head is about 1 m) results in a decrease of density of hazardous radiation of the frequency F1 approximately 400 times (R/r = 1/0.05=400), i.e. its action exerted on the user's health will be negligible. ,

Further operation of the system consists in assessing quality of radiation (in general case - quality of communication) on the frequency F1. After results of assessment of said quality (step 40) have been obtained, the radiation power is either increased or reduced to its rated value. In case of satisfactory ("Yes" in the condition 41) assessment of quality of communication on the channel 9 (Fig. 2, 3), power of the radiation emitted from the mobile repeater 2 can be changed. Rendering (step 42) of power of radiation having the frequency F1 after assessment of quality of this radio channel to its rated value is a standard operation applicable in many mobile communication systems (NMT, AMPS/DAMPS, GSM).

As an example, the adjustment process used in a mobile communication system using NMT 450 standard can be described. According to this standard, radiation power is adjusted with a mobile switching center (MCS) that receives from base stations the signal/noise ratio assessment results. When the level of the signal received from the mobile communication means 1 exceeds a predetermined level, MCS instructs mobile the communication means 1 to lower the radiated power level. Said power is received and decoded by the transceiver 14 and after its processing in the controller 17, the instruction to reduce the radiated power of the repeater 2 is generated, which instruction is delivered thereto via one of communication channels 13.

According to another technique, the radiation power decrease instruction can be received by other repeater 22 and processed in the controller 25. In case the communication status on a channel is unsatisfactory ("No" in condition 41), its radiation power having average frequency F1 can be increased (step 43). Further, in the event the passage of radiation having the frequency F1 is unsatisfactory ("No" in the condition 41), its power can be increased by a change in a system setup by increasing (step 44) the number of simultaneously radiating the mobile repeaters 2. Such technique to increase power can be used in the case when a simple increase (step 43) of the radiation power having the frequency F1 only in one mobile repeater is not sufficient. Of course, in further optimization of the radiation power, the system setup (step 43) can be changed by disconnecting some communication means 1, 2 therefrom.

Presence of a plurality of the mobile repeaters 2 causes additional inconveniences, because a subscriber is not able to attend to their presence in time of communication, by locating these repeaters at his place (car, case, office desk, etc.). In case a mobile repeater is arranged inside a means carried by a subscriber, then its control means (power switch, output power switch, etc.) and also indicators of its operation modes can be positioned at the exterior side of a means carried by a subscriber.

In case after connection of additional mobile repeaters 2 communication quality still remains unsatisfactory ("No' in the condition 45), additional channel 10 (Figs. 2, 3) is connected automatically (step 46). After the mobile communication means 1 is disabled ("Yes" in the condition 47), the mobile repeater 2 is brought automatically to the stand-by mode to wait for activation (step 48). The simplest way to execute this step can be generation of a relevant signal by the controller 25 after, first, auxiliary radiation 5 has disappeared; and, second, after a certain time period has elapsed. This measure is required to exclude false transition of the mobile repeater 2 into the stand-by mode subsequent to a brief inadvertent loss of the auxiliary radiation.

It should be finally noted that for the purpose to improve the operation characteristics, some mobile communication means can include the following additional functions or elements: a mobile repeater (to determine location of the mobile repeater) provides audible and light signals when a corresponding key is pressed on a mobile communication means or when the call signal is provided from the mobile communication means; indication of the direction towards the mobile repeater location on a mobile communication means; a mobile repeater is internally equipped with directed the antennas 3, 12 and with a system for orienting them in the optimal direction; audible message to a mobile communication means subscriber about status of a mobile repeater (battery discharge alarm, mobile repeater location signalling).

### Industrial Applicability

The invention can be suitably used in such communication fields as mobile telephone communication of all known standards (GSM, TDMA, JDC, CDMA, etc.), IRIDIUM and GLOBALSTAR global satellite personal mobile communication; trunking radiotelephone communication system; personal wireless communication radio stations. This invention can be further used with such communication means as wireless telephones. In this case, the direct or reflected-from-premises-objects light or infrared radiation can be used as the auxiliary radiation to establish communication from a wireless handset to a base unit. For a more convenient operation of such telephones, it is the information outputted from the base unit and inputted into wireless handset that should be transmitted by the auxiliary radiation. This invention can find its wide use also in the public places with presence of persons using a mobile telephone communication. In this case, such places are pre-provided with multichannel mobile repeaters, each comprising, for example, a number of transceivers, and thus said repeaters become fixed ones.

It should be noted that when public places equipped with fixed repeaters performing functions of mobile repeaters described herein will appear, a person being in such place must have a mobile telephone having the function of recognising the presence of a mobile repeater and that of automatic switching to the auxiliary radiation operation mode. Thus, a person having a mobile telephone described herein, even without a mobile repeater, will be able, first, to reduce irradiation of his encephalon by hazardous electromagnetic radiation, and, second, improve reliability of communication.

## Claims

1. A method for transmitting a message in a mobile communication system, including a first mobile communication means (1), a mobile repeater (2) and a second communication means (7), **characterized in that**:
assessing (33) in the mobile repeater (2) the signal quality of a message received from the first mobile communication means (1);
setting (34) a threshold value for the signal level of the received message, and in case the signal level of the received message is worse than the threshold value, the first mobile communication means (1) transmits a data directly to the second communication means (7) using a first transceiver (14) which emits a message-modulated electro magnetic radiation (10), and in case the signal level of the received message is better than a given threshold value, the first mobile communication means (1) transmits a data to the second communication means (7) via the mobile repeater (2) using a second transceiver (15) which emits a message-modulated auxiliary radiation (5), and a transmitter (22) included in the mobile repeater (2) which emits message-modulated electro magnetic radiation (9).

2. The method as claimed in claim 1, **characterized in that** a flux (5) of infrared radiation is used as the message-modulated auxiliary radiation.

3. The method as claimed in any one of claims 1 or 2, **characterized in that** a mobile telephone is used as the first mobile communication means (1), wherein a display of said telephone indicates a state of battery (27) of the mobile repeater (2).

## Patentansprüche

1. Verfahren zum Übertragen einer Nachricht in einem mobilen Kommunikationssystem, umfassend eine erste mobile Kommunikationseinrichtung (1), einen mobilen Repeater (2) und eine zweite Kommunikationseinrichtung (7), **gekennzeichnet durch** folgende Schritte:
im mobilen Repeater (2), Bewerten (33) der Signalqualität einer von der ersten mobilen Kommunikationeinrichtung (1) empfangenen Nachricht;
Setzen (34) eines Schwellenwertes für den Signalpegel der empfangenen Nachricht, wobei die erste mobile Kommunikationseinrichtung (1) für den Fall, dass der Signalpegel der empfangenen Nachricht schlechter ist als der Schwellenwert, Daten, unter Verwendung eines ersten Transceivers (14), der eine nachrichten-modulierte elektromagnetische Strahlung (10) aussendet, direkt zu der zweiten Kommunikationseinrichtung (7) überträgt, und die erste mobile Kommunikationseinrichtung (1) für den Fall, dass der Signalpegel der empfangenen Nachricht besser ist als ein vorgegebener Schwellenwert, Daten über den mobilen Repeater (2) unter Verwendung eines zweiten Transceivers (15), der eine nachrichten- modulierte Hilfsstrahlung (5) aussendet, und eines im mobilen Repeater (2) enthaltenen Transmitters (22), der eine nachrichten-modulierte elektromagnetische Strahlung (9) aussendet, zu der zweiten Kommunikationseinrichtung (7) überträgt.

2. Verfahren nach Anspruch 1, **dadurch gekennzeichnet, dass** eine Infrarotstrahlung (5) als die nachrichten-modulierte Hilfsstrahlung verwendet wird.

3. Verfahren nach Anspruch 1 oder 2, **dadurch gekennzeichnet, dass** ein Mobiltelefon als die erste mobile Kommunikationseinrichtung (1) verwendet wird, wobei eine Anzeigeeinrichtung des Telefons einen Batteriezustand (27) des mobilen Repeaters (2) anzeigt.

## Revendications

1. Un procédé pour transmettre un message à un système de communication mobile, comportant un premier moyen de communication mobile (1), un répéteur mobile (2) et un second moyen de communication (1), **caractérisé en ce que**:
la qualité du signal d'un message reçu par le premier moyen de communication (1) est évaluée (33) dans le répéteur mobile (2);
une valeur seuil pour le niveau du signal du message reçu est fixée, et dans le cas où un niveau de signal du message reçu est plus mauvais que la valeur du seuil, le premier moyen de communication mobile (1) transmet directement une donnée au second moyen de communication (7) utilisant un premier émetteur-récepteur (14) lequel émet une onde électromagnétique modulée par un message (10), et dans le cas où un niveau de signal du message reçu est meilleur que la valeur du seuil donné, le premier moyen de communication (1) transmet une donnée au second moyen de communication (7) par le répéteur mobile (2) utilisant un second émetteur-récepteur (15) qui émet une onde auxiliaire modulée par un message (5), et un émetteur (22) inclus dans le répéteur mobile (2) qui émet des ondes électromagnétique modulées par un message (9).

2. Le procédé selon la revendication 1, **caractérisé en ce que** un flux (5) d'un rayonnement infrarouge est utilisé comme onde auxiliaire modulée par le message.

3. Le procédé selon l'une des revendications 1 ou 2, **caractérisé en ce que** un téléphone portable est utilisé comme premier moyen de communication (1), dans lequel un affichage dudit téléphone portable indique l'état de la batterie (27) du répéteur mobile (2).
